# EUROPÄISCHE PATENTSCHRIFT

(11) **EP 1 833 865 B1**
(45) Veröffentlichungstag und Bekanntmachung des Hinweises auf die Patenterteilung: **17.03.2010**
(21) Anmeldenummer: 05823621.7
(22) Anmeldetag: 22.12.2005
(51) Int. Cl.: C08F 230/08, C09D 143/04

(54) **VERNETZBARE, SILANMODIFIZIERTE MISCHPOLYMERISATE**
CROSS-LINKABLE, SILANE-MODIFIED COPOLYMERS
COPOLYMERES RETICULABLES MODIFIES PAR DES SILANES

(30) Priorität: 05.01.2005 DE 102005000823
(43) Veröffentlichungstag der Anmeldung: 19.09.2007
(73) Patentinhaber: Wacker Chemie AG, 81737 München (DE)
(72) Erfinder: MINGE, Oliver, 80337 München (DE); WEITZEL, Hans-Peter, 84571 Reischach (DE); WEIDNER, Richard, 84489 Burghausen (DE)
(74) Vertreter: Schuderer, Michael
(86) Internationale Anmeldenummer: PCT/EP2005/013937
(87) Internationale Veröffentlichungsnummer: WO 2006/072411

(56) Entgegenhaltungen:
- DE-A1- 10 140 131
- US-A1- 2002 007 009
- DATABASE CAPLUS [Online] CHEMICAL ABSTRACTS SERVICE, COLUMBUS, OHIO, US; ELISEEVA, V. I. ET AL: "Preparation and properties of latexes of acrylic polymers with side alkoxysilyl groups" XP002375015 gefunden im STN Database accession no. 91:75153 & VYSOKOMOLEKULYARNYE SOEDINENIYA, SERIYA A , 21(6), 1315-21 CODEN: VYSAAF; ISSN: 0507-5475, 1979,
- DATABASE CAPLUS [Online] CHEMICAL ABSTRACTS SERVICE, COLUMBUS, OHIO, US; BUSLAEV, G. S. ET AL: "Synthesis and study of the properties of copolymers of methyl methacrylate-diethoxymethylsilane with methylmethacrylate" XP002375016 gefunden im STN Database accession no. 78:5187 & KREMNIIORG. MATER. 180-3 FROM: REF. ZH., KHIM. 1972, ABSTR. NO. 6S357, 1971,

## Beschreibung

Die Erfindung betrifft vernetzbare, silanmodifizierte Mischpolymerisate in Form deren in Wasser redispergierbaren Polymerpulver erhältlich mittels radikalisch initiierter Copolymerisation in wässrigem Medium von ethylenisch ungesättigten Monomeren mit einem nachvernetzenden ethylenisch ungesättigten Silan-Comonomer, und nachfolgender Trocknung der damit erhaltenen Polymerdispersion.

Polymere, die durch radikalische Copolymerisation von einem oder mehreren olefinischen Monomeren mit silanhaltigen, wässrig vernetzbaren olefinischen Monomeren, beispielsweise Vinyltrialkoxysilan, Vinyltriacetoxysilan, γ-(Meth)acryloxypropyltrialkoxysilan hergestellt werden, dienen als Basis für Klebstoffe, Abdichtungsmaterialien, Farben oder Beschichtungsmitteln in so unterschiedlichen Anwendungsfeldern wie der Kosmetik, der Klebetechnik, zur Veredelung von Textilien, Holz, Papier oder Metall, im Baubereich oder im Druckbereich. Der Einbau solcher Silylfunktionalitäten erlaubt nach Applikation (beispielsweise Verfilmung) eine Nachhärtung des Polymers, da die durch Hydrolyse unter Abgabe niedermolekularer Verbindungen wie zum Beispiel Alkohol oder Essigsäure entstehenden freien Silanolfunktionen unter Kondensation ein dichtes Netzwerk von SiloxanEinheiten aufbauen.

Um die durch Lösemitteleinsatz bestehende Gesundheits- und Umweltgefährdung auszuschließen und gesetzlichen Forderungen bezüglich VOC-Grenzwerten nachkommen zu können, geht der Trend bereits seit einigen Jahren in Richtung wässriger Systeme, die in der Regel mittels Emulsions- oder Suspensionspolymerisation erhalten werden. Die Herstellung solcher wässriger, nachvernetzbarer Polymerdispersionen ist bereits seit langem bekannt und beispielsweise in der US-A 3706697 beschrieben worden. Hier werden vernetzbare Acrylatcopolymere mit Alkoxysilan-funktionellen Gruppen durch Copolymerisation von γ-(Meth)acryloxyalkyltrialkoxysilan hergestellt.

Nachteilig erweist sich jedoch immer wieder die oftmals geringe Lagerstabilität der erhaltenen Dispersionen, da diese aufgrund der Anwesenheit von Alkoxysilylfunktionalitäten inhärent anfällig für Hydrolyse- und Kondensationsreaktionen sind. Aus demselben Grund kommt eine ausgeprägte Empfindlichkeit gegenüber einem sauren und basischen Milieu hinzu.

Lösungsansätze, diese vorzeitige Vernetzung zu verhindern, gab es bereits zu früheren Zeitpunkten: So beschreiben die US-A 4526930 und die US-A 5827922 den Einsatz von Alkoxysilanen mit sterisch anspruchsvollen Substitutionsmustern zur Herstellung wässriger Polymerdispersionen, welche aufgrund der räumlichen Abschirmung des Si-Zentrums eine erhöhte Hydrolysestabilität und damit Lagerfähigkeit aufweisen. Das Polymer kann dabei sowohl im Nachhinein in wässriger Phase dispergiert werden, als auch mittels Copolymerisation in Emulsion in disperser Form hergestellt werden. Die beiden größten Nachteile des Einsatzes sterisch gehinderter Alkoxysilane nach obiger Methode sind die hohen Kosten der entsprechenden monomeren Silanbausteine, sowie die Tatsache, dass die Silane bezüglich einer Hydrolyse bereits so unreaktiv sind, dass sie einen Vernetzungskatalysator auf Organozinn- oder Organotitanbasis benötigen, der aus toxikologischen Erwägungen ebenfalls vermieden werden sollte.

Die heutzutage zur Erzeugung silanvernetzender Polymerdispersionen eingesetzten Monomere stammen daher in der Regel aus den Gruppen der Vinyltrialkoxysilane oder der γ-(Meth)acryloxypropyltrialkoxysilane. Typische Vertreter sind beispielsweise Vinyltriethoxysilan oder γ-(Meth)acryloxypropyltrimethoxysilan.

Mit vinylsubstituierten Silanen als Monomerbaustein modifizierte Polymerdispersionen finden beispielsweise Verwendung als Farbbindemittel, wie in EP 1153979 A2 oder als Bautenschutzmittel, wie in der DE-OS 2148457 beschrieben. Hier werden Copolymerisate mit Vinyltrialkoxysilan- und γ-(Meth)acryloxyalkyltrialkoxysilan-Einheiten nicht zur Vernetzung, sondern zur Verbesserung der Nasshaftung eingesetzt. Die Gruppe dervinylsubstituierten Silane weisen jedoch in der Regel sehr ungünstige Copolymerisationsparameter auf, was wiederum beim Einbau in die Polymerkette zu einer ungünstigen Verteilung des Monomers führt und unmittelbar daraus folgend zu schlechten Vernetzungscharakteristiken (lokal hoch vernetzte Domänen gegenüber unvernetzten Domänen).

Die oben erwähnte Gruppe der γ-Methacrylsilane weist hier hingegen in der Regel ein erheblich günstigeres Copolymerisationsverhalten auf. Hinzu kommt eine akzeptable Lagerstabilität solchermaßen modifizierter Polymere. Die EP 327376 A2 beschreibt beispielsweise den Einsatz solcher Comonomere für die Erzeugung von Polyvinylesterdispersionen, die zur Herstellung von Dispersionsfarben mit verbesserter Nasshaftung dienen. Die GB-PS 1407827 beschreibt den Einsatz von γ-Methacrylsilan-modifizierter Polymere für Bautenbeschichtungen, ebenfalls mit verbesserter Nasshaftung.

Allerdings besitzen die erhaltenen Polymere oftmals eine nur unzureichende Vernetzungsgeschwindigkeit. Um doch noch eine ausreichend schnelle Härtung zu gewährleisten, muss hier deshalb oftmals auf das trimethoxysubstituierte Derivat ausgewichen werden, da nur hier die Hydrolysegeschwindigkeit akzeptabel ist. Zusätzlich muss dieses Methoxyderivat zu einem relativ hohen Prozent-Anteil in das Copolymer eingebaut werden. Dies führt in der Folge zu einer hohen VOC-Belastung mit Methanol. Alternativ müssen zusätzlich Katalysatoren auf Titanalkoholat-oder Zinnbasis zugesetzt werden, beispielsweise in der WO 97/12940 A1, und/oder im Aushärtungsschritt bei höheren Temperaturen gearbeitet werden.

Seit einigen Jahren sind nun Silane zugänglich, bei denen das mit Alkoxy- oder OH-Gruppen substituierte Siliciumatom, direkt über eine Methylenbrücke mit einem ungesättigten Kohlenwasserstoffrest verbunden ist, welcher ein oder mehrere ethylenisch ungesättigte Kohlenstoffbindungen aufweist, wobei die Wasserstoffreste der Methylenbrücke auch durch Alkyl- und/oder Arylreste ersetzt sein können, und eine C=C-Doppelbindung in α-Stellung zum Si-Atom steht (im folgenden α-Silane). Diese zeichnen sich strukturell im Vergleich zu konventionellen γ-Silanen mit einer Propylbrücke (-C₃H₆-) dadurch aus, dass lediglich eine Methyleneinheit (-CH₂-) die radikalisch polymerisierbare Methacrylgruppe von der silanvernetzenden Alkoxysilylgruppe trennt.

Ethylenisch ungesättigte α-Silane sind als Comonomere für Silan-modifizierte Polyvinylacetale aus der DE 10140131 A1 bekannt und führen zur Verbesserung der Haftung von Polyvinylacetale. In der EP 1308468 A1 werden Copolymerisate beschrieben, welche neben Vinylester- bzw. Acrylat-Einheiten noch Polysiloxan, ethylenisch ungesättigte Silane und Epoxidfunktionen aufweisen. Der Silananteil dient dabei zur Verbesserung der Nasshaftung der Copolymerisate.

Der Erfindung lag die Aufgabe zugrunde vernetzbare Polymerisate zur Verfügung zu stellen, welche sich gegenüber herkömmlichen, über silanfunktionelle Gruppen vernetzbaren Polymerisaten, dadurch auszeichnen, dass sie über eine verbesserte Reaktivität als konventionelle Systeme verfügen, ohne dass darunter die Lagerstabilität leidet.

Es wurde nun überraschend gefunden, dass ethylenisch ungesättigte α-Silane geeignet sind, um wässrige, silanvernetzende Mischpolymerisate herzustellen, welche höhere Vernetzungsreaktivität verbunden mit einer den bisherigen Systemen ebenbürtigen Lagerstabilität zeigen. Auf diese Weise können Alkoxysilanfunktionelle Mischpolymerisate hergestellt werden, die wegen der besseren Vernetzungseigenschaften einen geringeren Silangehalt im Copolymerisat möglich machen, und damit den Ersatz von giftigen, methoxysubstituierten Silanen durch die harmlosen, ethoxysubstituierten Silane erlauben, ohne dass dies mit einem intolerablen Verlust an Vernetzungsreaktivität einhergeht, und somit in der VOC-Bilanz erheblich besser abschneiden.

Gegenstand der Erfindung sind vernetzbare, silanmodifizierte Mischpolymerisate in Form deren in Wasser redispergierbaren Polymerpulver erhältlich mittels radikalisch initiierter Copolymerisation in wässrigem Medium von ethylenisch ungesättigten Monomeren mit einem nachvernetzenden ethylenisch ungesättigten Silan-Comonomer, und nachfolgender Trocknung der damit erhaltenen Polymerdispersion, dadurch gekennzeichnet, dass
a) ein oder mehrere Monomere aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Vinylether, Olefine, Diene und Vinylhalogenide, mit
b) 0.1 bis 50 Gew.-%, bezogen auf das Gesamtgewicht von a) und b), von einem oder mehreren ethylenisch ungesättigten α-Silanen der allgemeinen Formel (I) (R¹O)₃₋ₙ(R²)ₙSi-CR³₂-X (I) copolymerisiert werden, wobei R¹, R² und R³ gleich oder verschieden sind und jeweils für Wasserstoff, einen linearen, verzweigten oder zyklischen aliphatischen oder aromatischen Kohlenwasserstoffrest zwischen 1 und 18 C-Atomen stehen, n die Werte 0, 1 oder 2 bedeuten kann, und X ein Acryl- oder Methacrylrest ist, und die Trocknung der Polymerdispersion zur Herstellung der in Wasser redispergierbaren Polymerpulver nach Zusatz von Schutzkolloiden als Verdüsungshilfe erfolgt.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, 1-Alkylethylene mit C₁- bis C₆-Alkylrest, Propylen und 1,3-Butadien. Bevorzugt sind Ethylen und 1,3-Butadien. Als Vinylaromaten bevorzugt sind Styrol, alpha-Methylstyrol, die isomeren Vinyltoluole und Vinylxylole sowie Divinylbenzole. Besonders bevorzugt ist Styrol. Unter den Vinylhalogenverbindungen sind Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid. Ein bevorzugter Vinylether ist beispielsweise Methylvinylether.

Gegebenenfalls können noch 0.05 bis 20 Gew.-%, vorzugsweise 1 bis 10 Gew.-%, bezogen auf das Gesamtgewicht von a) und b), Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats.

Besonders bevorzugt werden als Comonomere a) ein oder mehrere Monomere aus der Gruppe Vinylacetat, Vinylester von αverzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien. Besonders bevorzugt werden als Comonomere a) auch Gemische von Vinylacetat und Ethylen; Gemische von Vinylacetat, Ethylen und einem Vinylester von α-verzweigten Monocarbonsäuren mit 9 bis 11 C-Atomen; Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im allgemeinen eine Glasübergangstemperatur Tg von ≤ 60°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Unter α-Silane sind solche Silane zu verstehen, bei denen das mit Alkoxy- oder OH-Gruppe substituierte Siliciumatom, direkt über eine Methylenbrücke mit einem ungesättigten Kohlenwasserstoffrest verbunden ist, welcher ein oder mehrere ethylenisch ungesättigte Kohlenstoffbindungen aufweist, wobei die Wasserstoffreste der Methylenbrücke auch durch Alkyl- und/oder Arylreste ersetzt sein können, und eine C=C-Doppelbindung in α-Stellung zum Si-Atom steht.

Geeignete α-Silane sind solche der allgemeinen Formel (I) (R¹O)₃₋ₙ (R²)ₙSi-CR³₂-X (I), wobei R¹, R² und R³ gleich oder verschieden sind und jeweils für Wasserstoff, einen linearen, verzweigten oder zyklischen aliphatischen oder aromatischen Kohlenwasserstoffrest zwischen 1 und 18 C-Atomen stehen, n die Werte 0, 1 oder 2 bedeuten kann, und X ein Acryl- oder Methacrylrest ist.

Bevorzugt sind als Reste R¹ und R² unsubstituierte Alkylgruppen mit 1 bis 6 C-Atomen, der Phenylrest und Wasserstoff. Besonders bevorzugt ist für R¹ der Methylrest und Ethylrest. R² ist vorzugsweise Wasserstoff, Methyl oder Ethyl. R³ ist vorzugsweise Wasserstoff.

Bevorzugt sind α-Methacryloxymethylmethoxydimethylsilan, α-Methacryloxymethyldimethoxymethylsilan, α-Methacryloxymethyltrimethoxysilan. Besonders bevorzugt sind α-Methacryloxymethylethoxydimethylsilan, α-Methacryloxymethyldiethoxymethylsilan, α-Methacryloxymethyltriethoxysilan.

Vorzugsweise werden die α-Silane b) in einer Menge von 0,1 bis 20 Gew.-%, bezogen auf das Gesamtgewicht von a) und b) copolymerisiert.

Die Herstellung der Copolymerisate erfolgt nach den bekannten Techniken der Lösungs-, Suspensions- oder Emulsionspolymerisation. Im Falle von Lösungspolymerisation erfolgt die Dispergierung im wässrigen nach erfolgter Polymerisation. Bevorzugt wird die Polymerisation aber nach der Methodik der Emulsionspolymerisation oder verwandter Techniken wie der Suspensions-, Dispersions- oder Miniemulsionspolymerisation durchgeführt: Die Reaktionstemperaturen liegen in dieser Ausführungsform zwischen 0°C und 100°C, bevorzugt zwischen 5°C und 80°C, besonders bevorzugt zwischen 30°C und 70°C. Der pH-Wert des Dispergiermediums liegt zwischen 2 und 9, bevorzugt zwischen 4 und 8. In einer besonders bevorzugten Ausführungsform zwischen 6,5 und 7,5.

Die Einstellung des pH-Wertes vor Beginn der Reaktion kann durch Salzsäure oder Natronlauge erfolgen.

Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente. In einer bevorzugten Ausführungsform wird so vorgegangen, dass die Comonomere a) vor dem Start der Polymerisation teilweise vorgelegt werden, und der Rest nach der Initiierung zudosiert wird, und die α-Silane b) nach der Initiierung vollständig zudosiert werden.

Die Initiierung der Polymerisation erfolgt mittels der üblichen wasserlöslichen Initiatoren oder Redox-Initiator-Kombinationen. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril. Die genannten Initiatoren werden vorzugsweise in Mengen von 0,01 bis 4,0 Gew.-%, bezogen auf das Gesamtgewicht der Monomeren, eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0,15 bis 3 Gew.-% der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes Initiator-System aus den vorangenannten Komponenten ist das System t-Butylhydroperoxid/- Natriumhydroxymethansulfinat /Fe (EDTA)^{2+/3+}.

Als Dispergiermittel können alle üblicherweise verwendeten Emulgatoren und/oder Schutzkolloide eingesetzt werden. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Schutzkolloide und/oder Emulgatoren werden im allgemeinen in einer Menge von insgesamt 1 bis 20 Gew.-%, bezogen auf das Gesamtgewicht der Monomere a) und b), bei der Polymerisation zugesetzt.

Die erhaltenen Dispersionen weisen nach erfolgter Reaktion einen pH-Wert zwischen 4 und 9 auf, insbesondere zwischen 7 und 8. Durch Salzsäure oder Natronlauge kann dieser jedoch im Nachhinein variiert werden. Zur Regelung des pH-Wertes können außerdem vor Beginn der Reaktion oder nach abgeschlossener Reaktion gängige organische oder anorganische Puffer, beispielsweise auf Hydrogencarbonat- oder Hydrogenphosphatbasis eingebracht werden. Der Feststoffgehalt der Dispersion beträgt nach der Polymerisation bzw. nach Aufnahme eines Lösungspolymerisats in Wasser zwischen 25 und 75 Gew.-%, insbesondere zwischen 30 und 60 Gew.-%, ganz besonders zwischen 45 und 55 Gew.-%. Die Größe der dispergierten Polymerteilchen wird unter anderem durch Art und Menge des verwendeten Dispergiermittels, durch die Art und Dauer der Scherung sowie durch eventuelle Zusätze an hydrophoben Hilfsmitteln bestimmt. Üblicherweise liegen die Durchmesser der Polymerteilchen zwischen 10 und 5000 nm, besonders zwischen 50 und 1000 nm. Ganz besonders bevorzugt sind Teilchengrößen zwischen 100 und 250 nm.

Zur Herstellung der in Wasser redispergierbaren Polymerpulver werden die wässrigen Dispersionen, nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Bei der Trocknung zu in Wasser redispergierbaren Polymerpulvern wird in der Regel eine Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die so erhaltenen Mischpolymerisate besitzen in wässriger Dispersion oder Redispersion gute Lagerstabilitäten und zeichnen sich dadurch aus, dass sie nach Applikation die Fähigkeit zur Härtung bei niedrigen Temperaturen verbunden mit raschen Aushärtungsgeschwindigkeiten besitzen. Die Härtung wird dabei durch die Ausbildung eines dreidimensionalen Netzwerkes aus Si-O-Si-Bindungen verwirklicht.

Die vernetzbaren, silanmodifizierten Mischpolymerisate in Form deren wässrigen Polymerdispersionen oder in Wasser redispergierbaren Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

Die nachfolgenden Beispiele dienen zur weiteren Erläuterung der Erfindung.

Falls nicht anders angegeben, sind alle Mengen- und Prozentangaben auf das Gewicht bezogen. Alle Reaktionen fanden in einer inerten Atmosphäre (Stickstoff) statt. Die Ermittlung der Partikelgrößen der erhaltenen Dispersionen erfolgte mittels eines Teilchengrößenmessgerätes (Coulter-Counter). pH-Werte wurden mittels einer Einstabmesselektrode bestimmt.

### Beispiel 1: Polymerdispersion 1 (PD1)

In einem 1000 ml-Polymerisationsgefäß mit Ankerrührer wurden
21,8 g n-Butylacrylat
11,4 g Styrol
83,4 ml Wasser
1,7 g Acrylsäure
0,4 g Natriumdodecylsulfat
0,16 g Natriumvinylsulfonat

je 10 mg Eisen(II)-sulfat und EDTA-Dinatriumsalz auf einen pH-Wert von 6,5 eingestellt und unter Rühren (200 rpm) auf 40°C erhitzt (Vorlage).

In einem ersten Gefäß (Zulauf 1a) wurde eine 10 Gew.-%-ige Lösung von Tert-Butylhydroperoxid in Wasser hergestellt.

In einem zweiten Gefäß (Zulauf 1b) wurde eine 5 Gew.-%-ige Lösung von Natriumhydroxymethansulfinat in Wasser hergestellt.

In einem dritten Gefäß (Zulauf 2) wurde eine Monomeremulsion aus
169,3 ml Wasser
5,10 g Acrylsäure
29,0 g α-Methacryloxymethyltriethoxysilan
13,6 g Natriumdodecylsulfat
197 g n-Butylacrylat
103 g Styrol
hergestellt.

Zulauf 1a und 1b wurden mit einer Dosiergeschwindigkeit von 105 µl/min gestartet und die Vorlage 20 Minuten bei 40°C polymerisiert. Anschließend wurde Zulauf 2 mit einer Dosiergeschwindigkeit von 4 ml/min gestartet und die Monomeremulsion innerhalb 165 min kontinuierlich zudosiert. Abschließend wurde noch 1 h nachpolymerisiert. Dann wurde auf Raumtemperatur abgekühlt. Die Polymerdispersion hatte einen Festgehalt von 53,5 % bei einem pH-Wert von 7,6. Der Tg-Wert war +2°C. Die mittels Lichtstreuung ermittelte mittlere Teilchengröße war 140 nm mit einer Polydispersität von nahe 1.

### Beispiel 2: Polymerdispersion 2 (PD2)

Wie Beispiel 1, jedoch erfolgte die Polymerisation bei 20°C über einen Zeitraum von insgesamt 6,5 h. Zulauf 2 war wie folgt zusammengesetzt.

| | | |
|---|---|---|
| Zulauf 2: | Wasser | 169,3 g |
| | Acrylsäure | 5,1 g |
| | α-Methacryloxymethyltriethoxysilan | 7,0 g |
| | SDS | 13,6 g |
| | n-Butylacrylat | 196,5 g |
| | Styrol | 103,0 g |

Die entstandene Polymerdispersion hatte einen Festgehalt von 48 % bei einem pH-Wert von 7,6. Die mittlere Teilchengröße war 130 nm bei einer Polydispersität von 1,1.

### Beispiel 3: Polymerdispersion 3 (PD3)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyltriethoxysilan | 7,0 g |
| | SDS | 13,6 g |
| | n-Butylacrylat | 196,5 g |
| | Styrol | 103,0 g |

Die entstandene Polymerdispersion hatte einen Festgehalt von 50 % bei einem pH-Wert von 7,5. Die mittlere Teilchengröße war 150 nm bei einer Polydispersität von 1,08. Der Tg-Wert war -3°C.

### Beispiel 4: Polymerdispersion 4 (PD4)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyltriethoxysilan | 60 g |
| | SDS | 13,6 g |
| | n-Butylacrylat | 196,5 g |
| | Styrol | 103,0 g |

Die entstandene Polymerdispersion hatte einen Festgehalt von 50 % bei einem pH-Wert von 7,5. Die mittlere Teilchengröße war 150 nm bei einer Polydispersität von 1,08. Der Tg-Wert war 0°C.

### Beispiel 5: Polymerdispersion 5 (PD5)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyldimethylmono-methoxysilan | 60,7 g |
| | SDS | 13,6 g |
| | n-Butylacrylat | 196,5 g |
| | Styrol | 103,0 g |

Die entstandene Polymerdispersion hatte einen Festgehalt von 53 % bei einem pH-Wert von 7,6. Die mittlere Teilchengröße war 147 nm bei einer Polydispersität von 1,13. Der Tg-Wert war -3°C

### Beispiel 6: Polymerdispersion 6 (PD6)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyldimethylmono-methoxysilan | 29,0 g |
| | SDS | 13,6 g |
| | n-Butylacrylat | 196,5 g |
| | Styrol | 103,0 g |

Die entstandene Polymerdispersion hatte einen Festgehalt von 53,6 % bei einem pH-Wert von 7,3. Die mittlere Teilchengröße war 150 nm bei einer Polydispersität von 1,12. Der Tg-Wert war +5°C.

### Beispiel 7: Polymerdispersion 7 (PD7)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyltriethoxysilan | 3,0 g |
| | SDS | 13,6 g |
| | n-Butylacrylat | 196,5 g |
| | Styrol | 103,0 g |

Die entstandene Polymerdispersion hatte einen Festgehalt von 50,0 % bei einem pH-Wert von 7,6. Die mittlere Teilchengröße war 147 nm bei einer Polydispersität von 1,08.

### Beispiel 8: Polymerdispersion 8 (PD8)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyltriethoxysilan | 29,0 g |
| | SDS | 13,6 g |
| | n-Butylacrylat | 196,5 g |
| | Styrol | 103,0 g |

Die entstandene Polymerdispersion hatte einen Festgehalt von 51,4 % bei einem pH-Wert von 7,8. Die mittlere Teilchengröße war 156 nm bei einer Polydispersität von 1,12.

### Beispiel 9: Polymerdispersion 9 (PD9)

Wie Beispiel 1, jedoch war Zulauf 2 wie folgt zusammengesetzt

| | | |
|---|---|---|
| Zulauf 2: | Wasser | 169,3 g |
| | Acrylsäure | 5,1 g |
| | α-Methacryloxymethyldimethylmono-ethoxysilan | 29,0 g |
| | SDS | 13,6 g |
| | n-Butylacrylat | 196,5 g |
| | Styrol | 103,0 g |

Die entstandene Polymerdispersion hatte einen Festgehalt von 51,4 % bei einem pH-Wert von 7,8. Die mittlere Teilchengröße war 156 nm bei einer Polydispersität von 1,12.

### Beispiel 10: Polymerdispersion 10 (PD10)

Wie Beispiel 1, jedoch erfolgte die Stabilisierung des Polymerlatex durch eine 20 Gew.-%-ige wässrige Lösung eines Polyvinylalkohols (Hydrolysegrad 88-Mol-%, Höppler-Viskosität 4 mPas). Vorlage und Zulauf 2 waren wie folgt zusammengesetzt
Vorlage: 7,3 g n-Butylacrylat
3,8 g Styrol
66 ml Wasser
1,7 g Acrylsäure
10,6 ml Polyvinylalkohol (20 %-ig)
0,10 g Natriumvinylsulfonat
je 20 mg Eisen (II) - sulfat und EDTA-Dinatriumsalz

| | | |
|---|---|---|
| Zulauf 2: | Wasser | 134 g |
| | Acrylsäure | 5,0 g |
| | α-Methacryloxymethyltriethoxysilan | 29,0 g |
| | Polyvinylalkohol (20 %-ig) | 354,4 ml |
| | n-Butylacrylat | 65,5 g |
| | Styrol | 34,3 g |

Die entstandene Polymerdispersion hatte einen Festgehalt von 27 % bei einem pH-Wert von 7,5. Die mittlere Teilchengröße war 116 nm bei einer Polydispersität von 1,12.

### Vergleichsbeispiel 1: Vergleichsdispersion 1 (VD1)

Wie Beispiel 1, jedoch war Zulauf 2 wie folgt zusammengesetzt. Die entstandene Dispersion (Vergleichsdispersion VD1) wurde zu Vergleichszwecken angefertigt.

| | | |
|---|---|---|
| Zulauf 2: | Wasser | 169,3 g |
| | Acrylsäure | 5,1 g |
| | SDS | 13,6 g |
| | n-Butylacrylat | 196,5 g |
| | Styrol | 103,0 g |

Die entstandene Polymerdispersion hatte einen Festgehalt von 49 % bei einem pH-Wert von 8. Die mittlere Teilchengröße war 143 nm bei einer Polydispersität von 1,08.

### Vergleichsbeispiel 2: Vergleichsdispersion 2 (VD2)

Wie Beispiel 1, jedoch war Zulauf 2 wie folgt zusammengesetzt. Die entstandene Dispersion (Vergleichsdispersion VD2) wurde zu Vergleichszwecken angefertigt.

| | | |
|---|---|---|
| Zulauf 2: | Wasser | 169,3 g |
| | Acrylsäure | 5,1 g |
| | γ-Methacryloxypropyltrimethoxysilan | 29,0 g |
| | SDS | 13,6 g |
| | n-Butylacrylat | 196,5 g |
| | Styrol | 103,0 g |

Die entstandene Polymerdispersion hatte einen Festgehalt von 50,0 % bei einem pH-Wert von 7,5. Die mittlere Teilchengröße war 146 nm bei einer Polydispersität von 1,08.

### Stabilitätstest

Um die Lagerstabilitäten der Dispersion zu beurteilen, wurde eine Reihe von Tests durchgeführt.
Zum einen wurde der durch vorzeitige Hydrolyse freiwerdende Alkohol in der Gasphase über der Dispersion mittels headspace-GC/MS bestimmt: Das GC/MS lässt anhand der langsamen Zunahme der dem jeweiligen Alkohol zuzuordnenden Peaks eine allmählich stattfindende Hydrolyse der Si(OR)-Gruppierung vermuten. Dies wirkt sich jedoch in keiner Weise auf die Stabilität der Dispersionen oder auf ihre filmbildenden und vernetzenden Eigenschaften aus.

In regelmäßigen Abständen wurde die Viskosität der Dispersionen ermittelt, um das Ausmaß einer eventuellen vorherigen Vernetzung der Polymere in Dispersion abzuschätzen. Hier zeigte sich innerhalb von 4 Monaten Messzeit nur unbedeutende Änderung der Viskosität.

### Vernetzungstests

Um Vernetzungskinetiken der unterschiedlichen silanmodifizierten Dispersionen zu bestimmen, wurden für eine Reihe von Dispersionen mehrere Proben mittels eines 100-µm-Rakels ausgestrichen und unterschiedlich lange bei 50°C gelagert. Nach definierten Zeiten wurde die Änderung des Gelgehalts durch Bestimmung der innerhalb 20 h bei Raumtemperatur in Aceton löslichen Anteile ermittelt. Alle Dispersionen wiesen denselben Anteil an Silan im Polymer auf und waren gleich alt.
Die folgende Tabelle gibt einen Überblick über die Ergebnisse. Naturgemäß findet sich im Falle der trialkoxysubstituierten Zubereitungen PD1 und VD2 die schnellste Zunahme. Der Vergleich PD1 (alpha-triethoxy) gegen VD2 (gamma-trimethoxy) zeigt deutlich die erhöhte Vernetzungsgeschwindigkeit der Dispersion PD1.

| **PDX** | **Zunahme Gel-Gehalt % nach Minuten** | | | | | | | | |
|---|---|---|---|---|---|---|---|---|---|
| | **2** | **5** | **10** | **15** | **30** | **60** | **80** | **100** | **120** |
| PD1 | 11 | 13 | 16 | 23 | 27 | 30 | 33 | 36 | 40 |
| PD6 | 2 | 4 | 5 | 5 | 5 | 6 | 6 | 7 | 7 |
| PD8 | 2 | 7 | 12 | 13 | 13 | 13 | 17 | 21 | 25 |
| PD9 | 1 | 3 | 5 | 5 | 6 | 6 | 6 | 5 | 7 |
| VD1 | 0 | 0 | 0 | 0 | 0 | 0 | 0 | 0 | 0 |
| VD2 | 1 | 2 | 6 | 8 | 9 | 14 | 27 | 32 | 37 |

## Patentansprüche

1. Vernetzbare, silanmodifizierte Mischpolymerisate in Form deren in Wasser redispergierbaren Polymerpulver erhältlich mittels radikalisch initiierter Copolymerisation in wässrigem Medium von ethylenisch ungesättigten Monomeren mit einem nachvernetzenden ethylenisch ungesättigten Silan-Comonomer, und nachfolgender Trocknung der damit erhaltenen Polymerdispersion, **dadurch gekennzeichnet, dass**
a) ein oder mehrere Monomere aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Vinylether, Olefine, Diene und Vinylhalogenide, mit
b) 0,1 bis 50 Gew.-%, bezogen auf das Gesamtgewicht von a) und b), von einem oder mehreren ethylenisch ungesättigten α-Silanen der allgemeinen Formel (I) (R¹O)₃₋ₙ(R²)ₙSi-CR³₂-X (I) copolymerisiert werden, wobei R¹, R² und R³ gleich oder verschieden sind und jeweils für Wasserstoff, einen linearen, verzweigten oder zyklischen aliphatischen oder aromatischen Kohlenwasserstoffrest zwischen 1 und 18 C-Atomen stehen, n die Werte 0, 1 oder 2 bedeuten kann, und X ein Acryl- oder Methacrylrest ist, und die Trocknung der Polymerdispersion zur Herstellung der in Wasser redispergierbaren Polymerpulver nach Zusatz von Schutzkolloiden als Verdüsungshilfe erfolgt.

2. Vernetzbare, silanmodifizierte Mischpolymerisate in Form deren in Wasser redispergierbaren Polymerpulver nach Anspruch 1, **dadurch gekennzeichnet, dass** als Comonomere a) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien copolymerisiert werden.

3. Vernetzbare, silanmodifizierte Mischpolymerisate in Form deren in Wasser redispergierbaren Polymerpulver nach Anspruch 1, **dadurch gekennzeichnet, dass** für die Reste R¹ und R² unsubstituierte Alkylgruppen mit 1 bis 6 C-Atomen, der Phenylrest und Wasserstoff stehen und R³ Wasserstoff ist.

4. Vernetzbare, silanmodifizierte Mischpolymerisate in Form deren in Wasser redispergierbaren Polymerpulver nach Anspruch 1, **dadurch gekennzeichnet, dass** als α-Silane ein oder mehrere copolymerisiert werden, aus der Gruppe umfassend α-Methacryloxymethylmethoxydimethylsilan, α-Methacryloxymethyldimethoxymethylsilan, α-Methacryloxymethyltrimethoxysilan, α-Methacryloxymethylethoxydimethylsilan, α-Methacryloxymethyldiethoxymethylsilan, α-Methacryloxymethyltriethoxysilan.

5. Verfahren zur Herstellung der vernetzbaren, silanmodifizierten Mischpolymerisate nach Anspruch 1 bis 4, **dadurch gekennzeichnet, dass** die Polymerisation mit dem Lösungs-, Suspensions-,Emulsions- oder Miniemulsionspolymerisation erfolgt.

6. Verfahren nach Anspruch 5, **dadurch gekennzeichnet, dass** die Polymerdispersionen mittels Sprühtrocknung getrocknet werden.

7. Verwendung der vernetzbaren, silanmodifizierten Mischpolymerisate nach einem der Ansprüche 1 bis 4 in bauchemischen Produkten.

8. Verwendung der vernetzbaren, silanmodifizierten Mischpolymerisate nach einem der Ansprüche 1 bis 4 als Bindemittel für Beschichtungsmittel und Klebemittel.

9. Verwendung der vernetzbaren, silanmodifizierten Mischpolymerisate nach einem der Ansprüche 1 bis 4 als Beschichtungs- und Bindemittel für Textilien, Fasern, Holz und Papier.

## Claims

1. Crosslinkable, silane-modified copolymers in the form of their water-redispersible polymer powders obtainable by means of free-radically initiated copolymerization in aqueous medium of ethylenically unsaturated monomers with a post-crosslinking ethylenically unsaturated silane comonomer, and subsequent drying of the resultant polymer dispersion, **characterized in that**
a) one or more monomers from the group consisting of vinyl esters of unbranched or branched alkylcarboxylic acids having 1 to 15 carbon atoms, methacrylic esters and acrylic esters of alcohols having 1 to 15 carbon atoms, vinylaromatics, vinyl ethers, olefins, dienes and vinyl halides are copolymerized with
b) 0.1 to 50% by weight, based on the total weight of a) and b), of one or more ethylenically unsaturated α-silanes of the general formula (I) (R¹O)₃₋ₙ(R²)ₙSi-CR³2-X (I), R¹, R² and R³ being identical or different and each being hydrogen or a linear, branched or cyclic aliphatic or aromatic hydrocarbon radical of between 1 and 18 carbon atoms, it being possible for n to denote the values 0, 1 or 2, and X being an acryloyl radical or methacryloyl radical, and the drying of the polymer dispersion to prepare the water-redispersible polymer powders taking place following addition of protective colloids as spraying aids.

2. Crosslinkable, silane-modified copolymers in the form of their water-redispersible polymer powders according to Claim 1, **characterized in that** comonomers a) copolymerized are one or more monomers from the group of vinyl acetate, vinyl esters of α-branched monocarboxylic acids having 9 to 11 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene and 1,3-butadiene.

3. Crosslinkable, silane-modified copolymers in the form of their water-redispersible polymer powders according to Claim 1, **characterized in that** unsubstituted alkyl groups having 1 to 6 carbon atoms, the phenyl radical and hydrogen stand for the radicals R¹ and R², and R³ is hydrogen.

4. Crosslinkable, silane-modified copolymers in the form of their water-redispersible polymer powders according to Claim 1, **characterized in that** α-silanes copolymerized are one or more from the group consisting of α-methacryloyloxymethylmethoxydimethylsilane, α-methacryloyloxymethyldimethoxymethylsilane, α-methacryloyloxymethyltrimethoxysilane, α-methacryloyloxymethylethoxydimethylsilane, α-methacryloyloxymethyldiethoxymethylsilane and α-methacryloyloxymethyltriethoxysilane.

5. Process for preparing the crosslinkable, silane-modified copolymers according to Claims 1 to 4, **characterized in that** the polymerization takes place by solution, suspension, emulsion or miniemulsion polymerization.

6. Process according to Claim 5, **characterized in that** the polymer dispersions are dried by means of spray drying.

7. Use of the crosslinkable, silane-modified copolymers according to any one of Claims 1 to 4 in chemical products used in construction.

8. Use of the crosslinkable, silane-modified copolymers according to any one of Claims 1 to 4 as binders for coating materials and bonding agents.

9. Use of the crosslinkable, silane-modified copolymers according to any one of Claims 1 to 4 as coating materials and binders for textiles, fibres, wood and paper.

## Revendications

1. Copolymères réticulables, modifiés par des silanes, sous forme de leurs poudres de polymères redispersables dans l'eau, pouvant être obtenus par copolymérisation à amorçage radicalaire en milieu aqueux de monomères à insaturation éthylénique avec un comonomère silane à insaturation éthylénique, post-réticulable, et séchage subséquent de la dispersion de polymère ainsi obtenue, **caractérisés en ce que**
a) on copolymérise un ou plusieurs monomères choisis dans le groupe contenant des esters vinyliques d'acides alkylcarboxyliques ramifiés ou non ramifiés, ayant de 1 à 15 atomes de carbone, des esters d'acide méthacrylique et des esters d'acide acrylique d'alcools ayant de 1 à 15 atomes de carbone, des composés vinylaromatiques, des éthers vinyliques, des oléfines, des diènes et des halogénures de vinyle, avec
b) 0,1 à 50 % en poids, par rapport au poids total de a) et b), d'un ou plusieurs α-silanes à insaturation éthylénique de formule générale (I) (R¹O)₃₋ₙ (R²)ₙSi-CR³₂-X (I), R¹, R² et R³ étant identiques ou différents et représentant chacun un atome d'hydrogène, un radical hydrocarboné aliphatique linéaire, ramifié ou cyclique, ou aromatique, ayant entre 1 et 18 atomes de carbone, n peut représenter les valeurs 0, 1 ou 2, et X est un radical acrylique ou méthacrylique,
et, après addition de colloïdes protecteurs en tant qu'adjuvant d'atomisation, on effectue le séchage de la dispersion de polymère pour la préparation des poudres de polymères redispersables dans l'eau.

2. Copolymères réticulables, modifiés par des silanes, sous forme de leurs poudres de polymères redispersables dans l'eau, selon la revendication 1, **caractérisés en ce qu'**on copolymérise en tant que comonomères a) un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène, le 1,3-butadiène.

3. Copolymères réticulables, modifiés par des silanes, sous forme de leurs poudres de polymères redispersables dans l'eau, selon la revendication 1, **caractérisés en ce que** les radicaux R¹ et R² représentent des groupes alkyle non substitués ayant de 1 à 6 atomes de carbone, le radical phényle ou un atome d'hydrogène, et R³ est un atome d'hydrogène.

4. Copolymères réticulables, modifiés par des silanes, sous forme de leurs poudres de polymères redispersables dans l'eau, selon la revendication 1, **caractérisés en ce que** comme α-silanes on copolymérise un ou plusieurs silanes choisis dans le groupe comprenant l'α-méthacryloxyméthylméthoxydiméthylsilane, l'α-méthacryloxyméthyldiméthoxyméthylsilane, l'α-méthacryloxyméthyltriméthoxysilane, l'α-méthacryloxyméthyléthoxydiméthylsilane, l'α-méthacryloxyméthyldiéthoxyméthylsilane, l'α-méthacryloxyméthyltriéthoxysilane.

5. Procédé pour la préparation des copolymères réticulables, modifiés par des silanes, selon les revendications 1 à 4, **caractérisé en ce que** la polymérisation s'effectue par la polymérisation en solution, en suspension, en émulsion ou en miniémulsion.

6. Procédé selon la revendication 5, **caractérisé en ce que** les dispersions de polymères sont séchées par séchage par atomisation.

7. Utilisation des copolymères réticulables, modifiés par des silanes, selon l'une quelconque des revendications 1 à 4, dans des produits chimiques pour le bâtiment.

8. Utilisation des copolymères réticulables, modifiés par des silanes, selon l'une quelconque des revendications 1 à 4, en tant que liant pour des agents de revêtement et des adhésifs.

9. Utilisation des copolymères réticulables, modifiés par des silanes, selon l'une quelconque des revendications 1 à 4, en tant qu'agent de revêtement et liant pour textiles, fibres, bois et papier.
